# EUROPÄISCHE PATENTSCHRIFT

(11) **EP 1 148 259 B1**
(45) Veröffentlichungstag und Bekanntmachung des Hinweises auf die Patenterteilung: **26.10.2005**
(21) Anmeldenummer: 01105932.6
(22) Anmeldetag: 09.03.2001
(51) Int. Cl.: F16C 9/02, F16J 15/08

(54) **Geteilte Lageranordnung mit einer Zwischenlage**
Split bearing arrangement with an intermediate layer
Palier en deux parties avec une couche intermédiaire

(30) Priorität: 19.04.2000 DE 10019394
(43) Veröffentlichungstag der Anmeldung: 24.10.2001
(73) Patentinhaber: Bayerische Motoren Werke Aktiengesellschaft, 80809 München (DE)
(72) Erfinder: Luchner, Clemens, 85598 Baldham (DE); Stothard, Nigel, Dr., 81927 München (DE); Schimmelpfennig, Dierk, 80801 München (DE)

(56) Entgegenhaltungen:
- US-A- 4 681 329
- US-A- 4 842 287

## Beschreibung

Die Erfindung betrifft eine Lageranordnung mit einer Zwischenlage von der im Oberbegriff des Patentanspruchs 1 genannten Art.

Aus der englischen Patentschrift GB 1,211,956 ist bereits eine geteilte Lageranordnung mit einer Zwischenlage bekannt. Die Lageranordnung besteht bei dieser Patentschrift aus einem Kurbelgehäuse und einem Zylinderkopf, die gegeneinander verspannt werden. Als Zwischenlage wird eine Zylinderkopfdichtung eingesetzt. Diese Zylinderkopfdichtung zeichnet sich dadurch aus, dass sie radial um die Zylinderbohrung einen Metallring aufweist. Dieser verfügt sowohl zylinderkopfseitig als auch kurbelgehäuseseitig über korrespondierende erhabenene, schneidenförmige Bereiche. Diese erhabenen, schneidenförmigen Bereiche der Zylinderkopfdichtung werden bei der Montage, das heißt beim Verspannen von Zylinderkopf und Kurbelgehäuse, um den Zylinder umlaufend sowohl in den Zylinderkopf als auch in das Kurbelgehäuse eingepreßt. Durch diesen Vorgang entsteht ein zylinderumlaufender formschlüssiger Dichtbereich.

Nachteilig bei dieser Lösung ist, dass die Dicke der Zylinderkopfdichtung so ausgelegt sein muss, dass das durch die schneidenförmigen, erhabenen Bereiche verdrängte Material aus Zylinderkopf und Kurbelgehäuse, dem Verspannen der beiden auf Block, nicht entgegenwirkt. Das heißt, die Grundflächen des Metallrings dürfen im Gegensatz zu der eigentlichen Zylinderkopfdichtung weder mit dem Zylinderkopf noch mit dem Kurbelgehäuse auf Block gehen.

Der Erfindung liegt die Aufgabe zugrunde, eine geteilte Lageranordnung mit einer Zwischenlage aufzuzeigen, deren Spannflächen mit der Zwischenlage sowohl formschlüssig als auch auf Block verspannbar sind.

Erfindungsgemäß ist die Aufgabe durch die Merkmale des Patentanspruchs 1 gelöst.

Das Verspannen von Lagerstuhl und Lagerdeckel mit der Zwischenlage auf Block ist durch diese Anordnung möglich. Die gewünschten Vertiefungen sind durch spanende Bearbeitung, wie beispielsweise Schleifen oder Fräsen, oder durch spanlose Bearbeitung, wie Gießen oder Sintern einfach herstellbar.
Die Deformationen des verdrängten Materials sind aus plastischen und elastischen Anteilen zusammengesetzt. Während der plastische Anteil für den Formschluß zur Aufnahme von Schubkräften und zur Repositionierung der Lageranordnung nach einer Demontage notwendig ist, trägt der elastische Anteil vorteilhaft zur Abdichtung bei. Daher eignet sich diese Lageranordnung beispielsweise zur Abdichtung von Kurbelgehäuse und Zylinderkopf, Kurbelgehäuse und Bedplate oder Wasserpumpe und Zylinderkopf. Bei diesen Anwendungen werden die erhabenen, schneidenförmigen Bereiche vorteilhaft um die abzudichtende Lageranordnung umlaufend und geschlossen ausgelegt, wie bei einer Zylinderabdichtung einer Brennkraftmaschine.

Vorteilhaft können nach Anspruch 2 sowohl Lagerstuhl als auch Lagerdeckel aus ähnlich harten Materialien hergestellt werden. Die Zwischenlage ist aus einem Material komplementärer Härte. Durch diese Kombination ist sowohl konsequenter Leichtbau möglich, als auch für die jeweilige Anwendung das ideal harte Material einsetzbar.
Bei einem geteilten Lager aus weichem Material kommt eine harte Zwischenlage zur Verwendung. Diese Zwischenlage verfügt über die erhabenen, schneidenförmigen Bereiche, die sich bei der Montage sowohl in Lagerstuhl als auch Lagerdeckel einpressen.

Sind Lagerstuhl und Lagerdeckel aus einem harten Material gefertigt, so verfügen deren Spannflächen über die erhabenen, schneidenförmigen Bereiche. Die Zwischenlage besteht dann aus einer weichen Metalllage. Bei der Montage drücken sich die erhabenen, schneidenförmigen Bereiche aus Lagerstuhl und Lagerdeckel in die weiche Zwischenlage.

Durch Anspruch 3 ist immer ein Verschrauben von Lagerstuhl und Lagerdeckel mit der Zwischenlage bis auf Block gewährleistet.

Sind nach Anspruch 4 die erhabenen, schneidenförmigen Bereiche zueinander korrespondierend, so wird vorteilhaft die Zwischenlage bei der Montage von Lagerstuhl und Lagerdeckel in den Bereichen zwischen den erhabenen, schneidenförmigen Bereichen nicht deformiert. Auch dünne Zwischenlagen sind verwendbar. Bei versetzter Anordnung der erhabenen, schneidenförmigen Bereiche, erfolgt die Montage wie oben bereits dargestellt.

Durch die Dimensionierung der erhabenen, schneidenförmigen Bereiche nach Anspruch 5, können von der Lageranordnung maximal auftretende Querkräfte aufgenommen werden.

Die zwei beigefügten Zeichnungen stellen bevorzugte Ausführungsbeispiele für die Erfindung dar. Es zeigen im einzelnen:
- Fig. 1: Geteilte Lageranordnung mit weichem Lagerstuhl und weichem Lagerdeckel und harter Zwischenlage mit zueinander korrespondierenden, erhabenen, schneidenförmigen Bereichen.
- Fig. 2: Geteilte Lageranordnung mit hartem Lagerstuhl und hartem Lagerdekkel mit gegeneinander versetzten, erhabenen, schneidenförmigen Bereichen und weicher Zwischenlage.

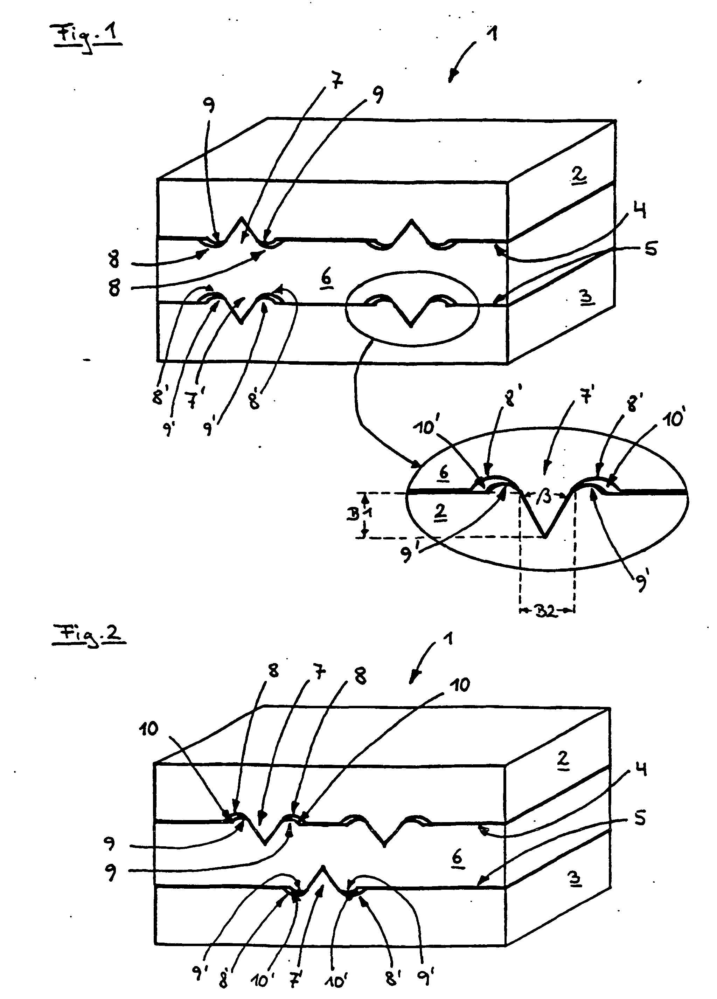

Fig. 1 zeigt eine geteilte Lageranordnung 1 bestehend aus einem Lagerstuhl 2 mit einer ersten Spannfläche 4 und einem Lagerdeckel 3 mit einer zweiten Spannfläche 5 und dazwischen eine Zwischenlage 6. Lagerstuhl 2 und Lagerstuhl 3 sind aus einem weichen Material. Die Zwischenlage 6 besteht aus einem harten Material. Auf beiden Seiten der Zwischenlage 6 sind zueinander korrespondierende, erhabene, schneidenförmige Bereiche 7, 7'. Lagerstuhl 2 und Lagerdeckel 3 und Zwischenlage 6 sind auf Block verspannt. Die erhabenen, schneidenförmigen Bereiche 7, 7' sind in die jeweils korrespondierende Spannfläche 4, 5 eingedrückt. Neben den erhabenen, schneidenförmigen Bereichen 7, 7' sind Vertiefungen 8, 8'. In den Vertiefungen, 8, 8' befindet sich das, beim erstmaligen Spannvorgang von einem erhabenen, schneidenförmigen Bereichen aus dem Lagerstuhl 2 und dem Lagerdeckel 3, verdrängte Material 9, 9'. Zwischen dem verdrängten Material 9, 9' und den Vertiefungen 8, 8' befindet sich jeweils ein Hohlraum 10, 10'.

Als Materialien für die hier dargestellte Lageranordnung kommen für Lagerstuhl 2 und Lagerdeckel 3 beispielsweise untereutektische Aluminium- oder Magnesiumlegierungen in Frage, während die Zwischenlage 6 beispielsweise aus einem Eisenwerkstoff hergestellt sein kann. Der Spitzenwinkel der erhabenen, schneidenförmigen Bereiche β liegt zwischen 45 und 90°. Um Kontaktkorrosion beispielsweise zwischen Magnesium- und Eisenwerkstoff zu verhindern, können vor oder nach der Erstmontage passivierende Schichten zwischen der Lageranordnung und der Zwischenschicht aufgebracht werden.

Eine weitere Ausgestaltungsvariante der Erfindung besteht darin, dass die erhabenen, schneidenförmigen Bereiche 7, 7' auf beiden Seiten der Zwischenlage 6 gegeneinander versetzt angeordnet sind.

Um bei einer Zweitmontage die Zwischenlage nicht zu verlieren, kann diese an Lagerstuhl oder Lagerdeckel beispielsweise durch Kleben, einen Schnappverschluss oder durch Verstemmen fixiert werden.

Die Bezugszeichen von Fig. 1 gelten auch für Fig. 2.

Fig. 2 zeigt eine geteilte Lageranordnung 1 bestehend aus einem Lagerstuhl 2 mit einer ersten Spannfläche 4 und einem Lagerdeckel 3 mit einer zweiten Spannfläche 5 und einer Zwischenlage 6. Lagerstuhl 2 und Lagerdeckel 3 sind aus einem harten Material. Die Zwischenlage 6 besteht aus einem weichen Material. Lagerstuhl 2, Lagerdeckel 3 und Zwischenlage 6 sind gegeneinander auf Block verspannt. Lagerstuhl 2 und Lagerdeckel 3 verfügen über erhabene, schneidenförmige Bereiche 7, 7'. Neben diesen schneidenförmigen Bereichen 7, 7' befinden sich jeweils Vertiefungen 8, 8'. In diesen Vertiefungen 8, 8' ist das von den erhabenen, schneidenförmigen Bereichen durch den ersten Spannvorgang verdrängte Material 9, 9' aufgenommen. Dies gewährleistet eine Verspannung der geteilten Lageranordnung mit der Zwischenlage auf Block. Die erhabenen, schneidenförmigen Bereiche 7, 7' sind versetzt zueinander auf dem Lagerstuhl 2 und dem Lagerdeckel 3 angeordnet. Zwischen dem verdrängten Material 9, 9' und den Vertiefungen 8, 8' befindet sich jeweils ein Hohlraum 10, 10'.

Als Materialien für die Zwischenlage kommen beispielsweise untereutektische Aluminium- oder Magnesiumlegierungen in Frage. Für Lagerstuhl 2 und Lagerdeckel 3 können beispielsweise harte Eisenwerkstoffe eingesetzt werden. Der Spitzenwinkel der erhabenen, schneidenförmigen Bereiche β liegt zwischen 45 und 90°. Bezüglich Kontaktkorrosion beziehungsweise einem Verlieren der Zwischenlage gelten die unter Fig. 1 aufgeführten Bemerkungen.

Eine weitere Ausgestaltungsvariante der Erfindung besteht darin, dass die erhabenen, schneidenförmigen Bereiche 7, 7' auf den Spannflächen 4 und 5 korrespondierend zueinander angeordnet sind.

### Bezugszeichenliste

- 1: Geteilte Lageranordnung mit Zwischenlage
- 2: Lagerstuhl
- 3: Lagerdeckel
- 4: Erste Spannfläche
- 5: Zweite Spannfläche
- 6: Zwischenlage
- 7, 7': Erhabener, schneidenförmiger Bereich
- 8, 8': Vertiefungen
- 9, 9': Verdrängtes Material
- 10, 10': Hohlraum

## Patentansprüche

1. Geteilte Lageranordnung bestehend aus einem Lagerstuhl mit einer ersten Spannfläche und einem, gegenüber diesem verspannbaren Lagerdeckel mit einer zweiten Spannfläche, und einer einspannbaren Zwischenlage, wobei die Lageranordnung und die Zwischenlage unterschiedliche Härten aufweisen und an zumindest einem Bauteil aus dem härteren Material zumindest ein erhabener, schneidenförmiger Bereich, der sich bei erstmaliger Montage in eine korrespondierende Fläche eindrückt, vorgesehen ist,
**dadurch gekennzeichnet, dass** neben den erhabenen, schneidenförmigen Bereichen (7, 7'), zur Aufnahme des verdrängten Materials (9, 9'), Vertiefungen (8, 8') vorgesehen sind.

2. Geteilte Lageranordnung nach Anspruch 1,
**dadurch gekennzeichnet, dass** das Material des Lagerstuhls (2) und des Lagerdeckels (3) ähnlich hart sind.

3. Geteilte Lageranordnung nach Anspruch 1,
**dadurch gekennzeichnet, dass** das Volumen der Vertiefungen (8, 8') größer als das Volumen des verdrängten Materials (9, 9') ist.

4. Geteilte Lageranordnung nach Anspruch 1,
**dadurch gekennzeichnet, dass** erhabene, schneidenförmige Bereiche (7, 7') zueinander korrespondierend oder versetzt angeordnet sind.

5. Geteilte Lageranordnung nach mindestens einem der zuvor genannten Ansprüche,
**dadurch gekennzeichnet, dass** die Grundbreite (B2) des erhabenen, schneidenförmigen Bereichs (7, 7') mindestens eineinhalb mal so breit wie die Eindringtiefe (B1) des erhabenen, schneidenförmigen Bereichs (7,7') in die korrespondierende Fläche ist.

## Claims

1. A divided bearing arrangement comprising a bearing block with a first clamping surface, a bearing cover with a second clamping surface for clamping to the bearing block, and an interlayer for clamping in between, wherein the bearing arrangement and the interlayer differ in hardness and at least one raised edge-like region is provided on at least one component formed of the harder material and presses into a corresponding surface during first assembly,
**characterised in that** recesses (8, 8') are provided alongside the raised edge-like regions (7, 7') for receiving the displaced material (9, 9').

2. A divided bearing arrangement according to claim 1, **characterised in that** the bearing block (2) and the bearing cover (3) are formed of similarly hard material.

3. A divided bearing arrangement according to claim 1, **characterised in that** the volume of the recesses (8, 8') is greater than the volume of the displaced material (9, 9').

4. A divided bearing arrangement according to claim 1, **characterised in that** raised, edge-like regions (7, 7') are disposed in correspondence with or offset from one another.

5. A divided bearing arrangement according to at least one of the previous claims, **characterised in that** the base width (B2) of the raised edge-like regions (7, 7') is at least one and a half times as great as the depth (B1) of penetration of the raised edge-like regions (7, 7') into the corresponding surface.

## Revendications

1. Palier en plusieurs parties comprenant un support de palier avec une première surface de serrage et un couvercle de palier avec une deuxième surface de serrage pouvant être serré avec le support de palier, et une couche intermédiaire à enserrer, le palier et la couche intermédiaire présentant des duretés différentes et sur au moins un composant réalisé à partir du matériau le plus dur au moins une zone convexe en forme de lame s'enfonçant lors du premier montage dans une surface correspondante,
**caractérisé en ce qu'**
à côté des zones (7, 7') convexes en forme de lame, des évidements (8, 8') sont prévus pour recevoir le matériau (9, 9') déplacé.

2. Palier en plusieurs parties selon la revendication 1,
**caractérisé en ce que**
le matériau du support de palier (2) et du couvercle de palier (3) présente une dureté similaire.

3. Palier en plusieurs parties selon la revendication 1,
**caractérisé en ce que**
le volume des évidements (8, 8') est plus grand que le volume du matériau (9, 9') déplacé.

4. Palier en plusieurs parties selon la revendication 1,
**caractérisé en ce que**
des zones (7, 7') convexes en forme de lame sont disposées en correspondance les unes avec les autres ou de manière décalée.

5. Palier en plusieurs parties selon au moins l'une des revendications précédentes,
**caractérisé en ce que**
la largeur de base (B2) de la zone (7, 7') convexe en forme de lame est au moins une fois et demie plus grande que la profondeur de pénétration (B1) de la zone (7, 7') convexe en forme de lame dans la surface correspondante.
